# FASCICULE DE BREVET EUROPEEN

(11) **EP 2 910 842 B1**
(45) Date de publication et mention de la délivrance du brevet: **20.02.2019**
(21) Numéro de dépôt: 14189611.8
(22) Date de dépôt: 21.10.2014
(51) Int. Cl.: F17C 13/02, F17C 13/12, F17C 5/00

(54) **Station et procédé de fourniture d'un fluide carburant inflammable**
Station und Verfahren zur Lieferung eines entzündlichen Kraftstofffluids
Station and method for supplying a flammable fuel fluid

(30) Priorité: 21.01.2014 FR 1450456
(43) Date de publication de la demande: 26.08.2015
(73) Titulaire: Cryolor, 57365 Ennery (FR)
(72) Inventeur: Varrassi, Lucien, 57890 Porcelette (FR)
(74) Mandataire: De Cuenca, Emmanuel Jaime

(56) Documents cités:
- WO-A1-2014/086413
- WO-A2-2013/190254
- US-A1- 2005 000 802

## Description

La présente invention concerne une station de fourniture d'un fluide carburant inflammable ainsi qu'un procédé de stockage.

L'invention concerne plus particulièrement uns station de fourniture d'un fluide carburant inflammable, la station comprenant un premier réservoir cryogénique pour stocker du carburant inflammable sous la forme d'un liquide cryogénique, un second réservoir cryogénique de stockage d'un gaz non inflammable et notamment un gaz inerte stocké sous forme de liquide cryogénique, un circuit de refroidissement en échange thermique avec le premier réservoir, le circuit de refroidissement comprenant une extrémité amont reliée au second réservoir cryogénique pour prélever du fluide cryogénique dans le second réservoir cryogénique en vue de céder des frigories du fluide du second réservoir cryogénique vers le premier réservoir, la station comprenant un circuit de soutirage de fluide du second réservoir.

Le stockage d'un liquide cryogénique dans un réservoir isolé sous vide est sujet à une remontée de sa pression interne. En effet, en l'absence de soutirage de liquide régulier, les entrées de chaleur par les supports du réservoir, les tuyauteries et l'isolation réchauffent le vide inter-parois. Du liquide se vaporise dans le réservoir et de ce fait la pression va augmenter jusqu'à l'ouverture d'une soupape de sécurité.

Le dégazage de gaz tels l'azote, l'oxygène et l'argon ne pose pas trop de problème cependant, lorsque le gaz stocké est inflammable (gaz naturel, hydrogène...) un tel dégazage risque de créer un nuage explosif donc une « zone ATEX ».

Une solution connue consiste à condenser dans le réservoir une partie de la phase gazeuse ou à refroidir le liquide pour éviter sa vaporisation (cf. le document DE19903214).

De plus, en cas de fuite de gaz inflammable, l'installation est également susceptible de provoquer une explosion.

Le document WO2014/086413A1 décrit un système de transport de gaz naturel avec un système de refroidissement à l'azote dans lequel de l'azote est purgé pour maintenir une pression positive dans le module de stockage pour empêcher l'entrée d'air.

Les systèmes pour éviter les conséquences négatives de telles fuites sont généralement complexes, coûteux et moyennement efficaces.

Un but de la présente invention est de pallier tout ou partie des inconvénients de l'art antérieur relevés ci-dessus.

A cette fin, la station selon l'invention, par ailleurs conforme à la définition générique qu'en donne le préambule ci-dessus, est essentiellement caractérisée en ce qu'elle comprend au moins un détecteur de fuite de carburant du premier réservoir et au moins un organe piloté d'ouverture d'une portion du circuit de soutirage, le au moins un organe d'ouverture étant commandé automatiquement en réponse à une détection de fuite par le au moins détecteur pour relâcher du fluide issu du second réservoir cryogénique de façon à inerter un volume au sein de la station.

Par ailleurs, des modes de réalisation de l'invention peuvent comporter l'une ou plusieurs des caractéristiques suivantes :
- le détecteur de fuite comprend au moins l'un parmi : un capteur de carburant, une sonde catalytique, un capteur chimique, un capteur de type optique,
- le au moins un organe d'ouverture comprend au moins l'un parmi : un robinet, une vanne, une buse de pulvérisation,
- le au moins un organe d'ouverture est espacé du premier réservoir d'une distance comprise zéro et cinq mètres et de préférence entre zéro et deux mètres,
- la station contient une armoire de commande regroupant des organes fonctionnels de commande de la station et en ce que le au moins organe d'ouverture comporte une extrémité qui débouche au moins en partie dans ladite armoire,
- le circuit de refroidissement comprend au moins un échangeur ou serpentin logé à l'intérieur du premier réservoir,
- le circuit de soutirage est relié au circuit de refroidissement et alimenté en fluide issu de ce dernier,
- la station comprend deux organes d'ouvertures distincts espacés,
- le circuit de refroidissement comprend deux conduites distinctes reliées par une extrémité amont au second réservoir et munies chacune d'un échangeur ou serpentin ou condenseur logé dans le premier réservoir, les deux serpentins étant situés respectivement dans les partie supérieure et inférieure du premier réservoir,
- la station comprend deux organes d'ouvertures situés respectivement sur deux portions distincte du circuit de soutirage reliées respectivement au deux conduites distinctes du circuit de refroidissement munies des échangeurs ou serpentins,
- les premier et second réservoirs sont des réservoirs cryogéniques à double parois avec vide inter-parois,
- les premier et second réservoirs sont logés dans une enveloppe extérieure commune sous vide,

L'invention concerne également un procédé de stockage d'un fluide carburant inflammable dans une station de remplissage comprenant un premier réservoir cryogénique stockant du carburant inflammable sous la forme d'un liquide cryogénique, un second réservoir cryogénique stockant un gaz inerte à une température inférieure à la température du fluide contenu dans le premier réservoir, la station comprenant un circuit de refroidissement en échange thermique avec le premier réservoir, le circuit de refroidissement comprenant une extrémité amont reliée au second réservoir cryogénique, le procédé comprenant une étape de soutirage de fluide cryogénique du second réservoir cryogénique, une étape d'échange thermique entre ce fluide soutiré et le fluide contenu dans le second réservoir cryogénique pour réduire ou supprimer la vaporisation du fluide dans le premier réservoir, le procédé comportant une étape de détection d'une éventuelle fuite de fluide du premier réservoir et, en cas de détection d'une telle fuite, une étape de libération de fluide issu du second réservoir dans l'atmosphère au sein de la station de façon adjacente au premier réservoir pour empêcher une inflammation par inertage.

Selon d'autres particularités possibles :
- le fluide contenu dans le premier réservoir comprend au moins un parmi : du gaz naturel, du méthane, de l'hydrogène et en ce que le fluide contenu dans le second réservoir comprend au moins un parmi : de l'azote, de l'argon,
- le fluide relâché en cas de détection d'une fuite de fluide du premier réservoir provient du fluide ayant échangé thermiquement avec le fluide du second réservoir cryogénique.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue en coupe, schématique et partielle, illustrant un premier exemple de réalisation d'une station de fourniture de carburant selon l'invention,
- la figure 2 représente une vue en coupe, schématique et partielle, illustrant un second exemple de réalisation d'une station de fourniture de carburant selon l'invention.

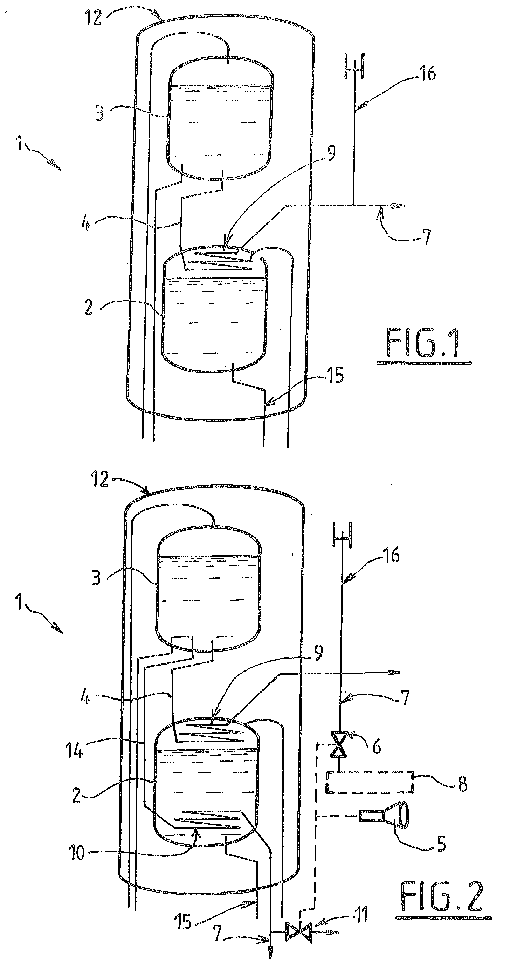

La station 1 illustrée à la figure 1 est une station de fourniture d'un fluide carburant inflammable, par exemple du gaz naturel à partir d'un premier réservoir 2 cryogénique stockant le carburant inflammable sous la forme d'un liquide cryogénique (par exemple à -140°C). Plus précisément, le premier réservoir 2 contient un mélange diphasique liquide/gaz.

La station 1 comprend un second réservoir 3 cryogénique de stockage d'un gaz non inflammable et notamment un gaz inerte tel que de l'azote stocké à une température de -196°C.

Le gaz inerte est également stocké sous forme de liquide cryogénique (mélange diphasique liquide/gaz).

Les premier 2 et second 3 réservoirs sont de préférence des réservoirs cryogéniques à double parois avec vide inter-parois.

La station 1 comprend un circuit 15 de soutirage de fluide du premier réservoir 3. Ce circuit 15 comprend par exemple une conduite de fourniture de carburant liquide vers un utilisateur, par exemple pour remplir des capacités ou des réservoirs de véhicules. Alternativement ou en combinaison, le liquide soutiré peut être fourni à une unité de vaporisation pour alimenter un utilisateur en gaz.

La station 1 comprend un circuit 4 de refroidissement en échange thermique avec le premier réservoir 2 et notamment avec le fluide à l'intérieur du premier 2 réservoir. Le circuit 4 de refroidissement comprend une conduite 4 ayant une extrémité amont reliée au second réservoir 3 cryogénique pour prélever du fluide cryogénique dans le second réservoir 3 cryogénique. Le circuit 4 de refroidissement comprend en aval une portion 9 en échange thermique avec l'intérieur du premier réservoir 1 en vue de céder des frigories du fluide du second réservoir 3 cryogénique vers le premier réservoir 2. Cette portion 9 d'échange thermique comprend par exemple un serpentin, un condenseur ou tout type d'échangeur approprié.

Sans que ce soit limitatif pour autant, cet échangeur 9 logé à l'intérieur du premier réservoir 2 est par exemple situé en partie supérieure du premier réservoir 2 pour refroidir la partie gazeuse du carburant. En aval de cet échangeur 9, le circuit 4 de refroidissement peut comporter une conduite 7 de fourniture de fluide de refroidissement réchauffé à un utilisateur (sous forme gazeuse et/ou liquide). Ainsi, la partie aval du circuit 4 de refroidissement peut former un circuit 7 de soutirage de fluide du second réservoir 3. C'est-à-dire que le circuit 7 de soutirage est relié au circuit 4 de refroidissement et alimenté en fluide inerte issu de ce dernier. C'est-à-dire que le circuit de soutirage 7 fournit en aval du fluide issu initialement du second réservoir 3 et ayant transité en amont dans le circuit de refroidissement (4 et/ou 14).

Ce circuit 7 de soutirage peut comporter une cheminée 16 munie d'un clapet formant un évent en cas de surpression déterminée.

Selon une particularité avantageuse, la station comprend au moins un détecteur 5 de fuite de carburant du premier réservoir 2 et un organe 6, 11 piloté d'ouverture d'une portion du circuit 4, 7 de refroidissement/soutirage.

Le détecteur 5 de fuite est disposé de préférence dans ou de façon adjacente à la station, par exemple à une distance comprise entre zéro et cinq mètres par rapport aux réservoirs 2, 3 ou une armoire de commande regroupant une ou des vannes de la station.

L'organe 6 d'ouverture est commandé automatiquement en réponse à une détection de fuite par le détecteur 5 pour relâcher du fluide issu du second réservoir 3 cryogénique de façon à inerter un volume au sein de la station.

Le au moins un organe 6 d'ouverture est situé sur le circuit de refroidissement/soutirage en aval de la portion en échange thermique avec le premier réservoir 2, et débouche notamment à l'extérieur des réservoirs 2, 3. C'est-à-dire que l'organe 6 d'ouverture relâche dans ou autour de la station du gaz non inflammable provenant du second réservoir 3 ayant échangé thermiquement (vaporisé notamment) avec le premier réservoir 2.

Le détecteur 5 de fuite comprend par exemple au moins l'un parmi : un capteur de carburant (notamment un capteur de gaz naturel), une sonde catalytique, un capteur chimique, un capteur de type optique, ou tout autre système approprié.

L'organe 6 d'ouverture peut comprend au moins l'un parmi : un robinet, une vanne, une buse de pulvérisation ou tout autre dispositif approprié permettant de libérer du gaz inerte dans une zone déterminée en réponse à une détection de fuite de carburant.

Par exemple, l'organe 6 d'ouverture est espacé du premier réservoir 2 d'une distance comprise zéro et cinq mètres et de préférence entre zéro et deux mètres, pour inerter la zone directement adjacente au premier réservoir 2. En variante, cet organe 6 d'ouverture est situé à distance, pour inerter une zone plus éloignée, par exemple entre deux et dix mètre si la fuite est susceptible de s'y produire et constitue une zone à risque.

Dans le cas où la station comprend une armoire 8 de commande regroupant des organes fonctionnels de commande de la station (vannes, électronique de commande, afficheurs...) l'organe 6 d'ouverture peut comporter une extrémité qui débouche au moins en partie dans ladite armoire 8 en vue de la protéger contre l'incendie.

Comme illustré à la figure 1, de façon avantageuse mais non impérative, les enveloppes délimitant les volumes de stockage des premier 2 et second 3 réservoirs peuvent être logées dans une enveloppe 12 extérieure commune sous vide. C'est-à-dire que les premier 2 et second 3 réservoirs isolés sous vide contenant des fluides respectifs à des températures distinctes partagent la même enveloppe extérieure et le même vide inter-parois.

La figure 2 illustre une variante possible de réalisation de l'invention qui se distingue de celle de la figure 1 uniquement en ce que le circuit de refroidissement comprend deux conduites 4, 14 distinctes munies chacune d'un échangeur ou serpentin 9, 10 ou condenseur logé dans le premier réservoir 2. De plus, la station comprend deux organes 6, 11 d'ouvertures distincts espacés et alimentés respectivement par les deux conduites 4, 14. Les éléments identiques à ceux décrits précédemment sont désignés par les mêmes références numériques et ne sont pas décrits une seconde fois.

Comme illustré, de préférence les deux serpentins 9, 10 sont situés respectivement dans les partie supérieure et inférieure du premier réservoir 2 (respectivement pour échanger avec les parties gazeuse et liquide du fluide).

Les deux conduites 4, 14 sont reliées au second réservoir 3 par exemple par des extrémités amont respectives (en variante cela peut être une extrémité commune).

Les deux organes 6, 11 peuvent ainsi déboucher dans des zones distinctes ou communes de la station.

On conçoit donc aisément que tout en étant de structure simple et peu coûteuse, la station 1 permet d'utiliser efficacement le fluide de refroidissement du réservoir de carburant pour sécuriser la station en cas de fuite de carburant. La station peut être fixe ou mobile (montée sur un véhicule ou une remorque).

## Revendications

1. Station de fourniture d'un fluide carburant inflammable, la station (1) comprenant un premier réservoir (2) cryogénique pour stocker du carburant inflammable sous la forme d'un liquide cryogénique, un second réservoir (3) cryogénique de stockage d'un gaz non inflammable et notamment un gaz inerte stocké sous forme de liquide cryogénique, un circuit (4, 14) de refroidissement en échange thermique avec le premier réservoir (2), le circuit (4, 14) de refroidissement comprenant au moins une extrémité amont reliée au second réservoir (3) cryogénique pour prélever du fluide cryogénique dans le second réservoir (3) cryogénique en vue de céder des frigories du fluide du second réservoir (3) cryogénique vers le premier réservoir (2), le circuit (4, 14) de refroidissement comprenant au moins un échangeur ou serpentin (9, 10) logé à l'intérieur du premier réservoir (2), c'est-à-dire en contact avec le fluide carburant, la station comprenant un circuit (4, 14, 7) de soutirage de fluide du second réservoir (3), **caractérisée en ce que** la station comprend au moins un détecteur (5) de fuite de carburant du premier réservoir (2) et au moins un organe (6, 11) piloté d'ouverture d'une portion du circuit (4, 14, 7) de soutirage, le au moins un organe (6) d'ouverture étant commandé automatiquement en réponse à une détection de fuite par le au moins détecteur (5) pour relâcher du fluide issu du second réservoir (3) cryogénique de façon à inerter un volume au sein de la station et **en ce que** le circuit (7) de soutirage de fluide du second réservoir (3) est relié au circuit (4, 14) de refroidissement et alimenté en fluide issu de ce dernier.

2. Station selon la revendication 1, **caractérisée en ce que** le détecteur (5) de fuite comprend au moins l'un parmi : un capteur de carburant, une sonde catalytique, un capteur chimique, un capteur de type optique.

3. Station selon la revendication 1 ou 2, **caractérisée en ce que** le au moins un organe (6, 11) d'ouverture comprend au moins l'un parmi: un robinet, une vanne, une buse de pulvérisation.

4. Station selon l'une quelconque des revendications 1 à 3, **caractérisée en ce que** le au moins un organe (6, 11) d'ouverture est espacé du premier réservoir (2) d'une distance comprise zéro et cinq mètres et de préférence entre zéro et deux mètres.

5. Station selon l'une quelconque des revendications 1 à 4, **caractérisée en ce qu'**elle contient une armoire (8) de commande regroupant des organes fonctionnels de commande de la station et **en ce que** le au moins organe (6, 11) d'ouverture comporte une extrémité qui débouche au moins en partie dans ladite armoire (8).

6. Station selon l'une quelconque des revendications 1 à 5, **caractérisée en ce qu'**elle comprend deux organes (6, 11) d'ouvertures distincts espacés.

7. Station selon l'une quelconque des revendications 1 à 6, **caractérisée en ce que** le circuit de refroidissement comprend deux conduites (4, 14) distinctes reliées par une extrémité amont au second réservoir (3) et munies chacune d'un échangeur ou serpentin (9, 10) ou condenseur logé dans le premier réservoir (2), les deux serpentins (9, 10) étant situés respectivement dans les partie supérieure et inférieure du premier réservoir (2).

8. Station selon la revendication 7, **caractérisée en ce qu'**elle comprend deux organes (6, 11) d'ouvertures situés respectivement sur deux portions distincte du circuit (7) de soutirage reliées respectivement au deux conduites (4, 14) distinctes du circuit de refroidissement munies des échangeurs ou serpentins (9, 10).

9. Station selon l'une quelconque des revendications 1 à 8, **caractérisée en ce que** les premier (2) et second (3) réservoirs sont des réservoirs cryogéniques à double parois avec vide inter-parois.

10. Station selon la revendication 9, **caractérisée en ce que** les premier (2) et second (3) réservoirs sont logés dans une enveloppe (12) extérieure commune sous vide.

11. Procédé de stockage d'un fluide carburant inflammable dans une station de remplissage comprenant un premier réservoir (2) cryogénique stockant du carburant inflammable sous la forme d'un liquide cryogénique, un second réservoir (3) cryogénique stockant un gaz inerte à une température inférieure à la température du fluide contenu dans le premier réservoir (2), la station comprenant un circuit (4, 14) de refroidissement en échange thermique avec le premier réservoir (2), le circuit (4, 14) de refroidissement comprenant une extrémité amont reliée au second réservoir (3) cryogénique, le circuit (4, 14) de refroidissement comprenant au moins un échangeur ou serpentin (9, 10) logé à l'intérieur du premier réservoir (2), c'est-à-dire en contact avec le fluide carburant, le procédé comprenant une étape de soutirage de fluide cryogénique du second réservoir (3) cryogénique, une étape d'échange thermique entre ce fluide soutiré et le fluide contenu dans le second réservoir (3) cryogénique pour réduire ou supprimer la vaporisation du fluide dans le premier réservoir (2), le procédé étant **caractérisé en ce qu'**il comporte une étape de détection d'une éventuelle fuite de fluide du premier réservoir (2) et, en cas de détection d'une telle fuite, une étape de libération de fluide issu du second réservoir (3) dans l'atmosphère au sein de la station de façon adjacente au premier réservoir (2) pour empêcher une inflammation par inertage et **en ce que** le circuit (7) de soutirage de fluide du second réservoir (3) est relié au circuit (4, 14) de refroidissement et alimenté en fluide issu de ce dernier.

12. Procédé selon la revendication 11, **caractérisé en ce que** le fluide contenu dans le premier réservoir (2) comprend au moins un parmi : du gaz naturel, du méthane, de l'hydrogène et **en ce que** le fluide contenu dans le second réservoir (3) comprend au moins un parmi : de l'azote, de l'argon.

13. Procédé selon la revendication 11 ou 12, **caractérisé en ce que** le fluide relaché en cas de détection d'une fluide du premier réservoir provient du fluide ayant échangé thermiquement avec le fluide du second réservoir cryogénique.

## Patentansprüche

1. Station zur Lieferung eines entzündlichen Kraftstofffluids, wobei die Station (1) einen ersten Kryobehälter (2) zum Speichern von entzündlichem Kraftstoff in Form einer kryogenen Flüssigkeit, einen zweiten Kryobehälter (3) zum Speichern eines nicht entzündlichen Gases und insbesondere eines in Form einer kryogenen Flüssigkeit gespeicherten inerten Gases, einen Kühlkreis (4, 14) im Wärmeaustausch mit dem ersten Behälter (2) umfasst, wobei der Kühlkreis (4, 14) mindestens ein stromaufwärtiges Ende umfasst, das mit dem zweiten Kryobehälter (3) verbunden ist, um kryogenes Fluid aus dem zweiten Kryobehälter (3) zu entnehmen, um Kühlmittel des Fluids aus dem zweiten Kryobehälter (3) in den ersten Behälter (2) zu übertragen, wobei der Kühlkreis (4, 14) mindestens einen Tauscher oder eine Rohrschlange (9, 10) umfasst, der/die im Inneren des ersten Behälters (2) untergebracht ist, das heißt in Kontakt mit dem Kraftstofffluid, wobei die Station einen Kreis (4, 14, 7) zur Entnahme von Fluid aus dem zweiten Behälter (3) umfasst, **dadurch gekennzeichnet, dass** die Station mindestens einen Kraftstoffleckdetektor (5) des ersten Behälters (2) und mindestens ein gesteuertes Öffnungsorgan (6, 11) eines Abschnitts des Entnahmekreises (4, 14, 7) umfasst, wobei das mindestens eine Öffnungsorgan (6) als Antwort auf eine Leckdetektion durch den mindestens einen Detektor (5) automatisch gesteuert wird, um Fluid aus dem zweiten Kryobehälter (3) abzulassen, um ein Volumen innerhalb der Station zu inertisieren, und dadurch, dass der Fluid-Entnahmekreis (7) des zweiten Behälters (3) mit dem Kühlkreis (4, 14) verbunden und mit Fluid aus diesem versorgt ist.

2. Station nach Anspruch 1, **dadurch gekennzeichnet, dass** der Leckdetektor (5) mindestens eines umfasst von: einem Kraftstoffsensor, einer Katalysator-Sonde, einem chemischen Sensor, einem optischen Sensor.

3. Station nach Anspruch 1 oder 2, **dadurch gekennzeichnet, dass** das mindestens eine Öffnungsorgan (6, 11) mindestens eines umfasst von: einem Schließhahn, einem Ventil, einer Sprühdüse.

4. Station nach einem der Ansprüche 1 bis 3, **dadurch gekennzeichnet, dass** das mindestens eine Öffnungsorgan (6, 11) von dem ersten Behälter (2) um einen Abstand zwischen null und fünf Metern und vorzugsweise zwischen null und zwei Metern beabstandet ist.

5. Station nach einem der Ansprüche 1 bis 4, **dadurch gekennzeichnet, dass** sie einen Steuerschrank (8) enthält, der funktionelle Steuerorgane der Station zusammenfasst, und dadurch, dass das mindestens eine Öffnungsorgan (6, 11) ein Ende aufweist, das mindestens teilweise in den Schrank (8) mündet.

6. Station nach einem der Ansprüche 1 bis 5, **dadurch gekennzeichnet, dass** sie zwei verschiedene voneinander beabstandete Öffnungsorgane (6, 11) umfasst.

7. Station nach einem der Ansprüche 1 bis 6, **dadurch gekennzeichnet, dass** der Kühlkreis zwei verschiedene Leitungen (4, 14) umfasst, die durch ein stromaufwärtiges Ende mit dem zweiten Behälter (3) verbunden sind und jeweils mit einem Tauscher oder einer Rohrschlange (9, 10) oder einem Kondensator ausgestattet sind, die im ersten Behälter (2) untergebracht sind, wobei die beiden Rohrschlangen (9, 10) jeweils im oberen und unteren Teil des ersten Behälters (2) angeordnet sind.

8. Station nach Anspruch 7, **dadurch gekennzeichnet, dass** sie zwei Öffnungsorgane (6, 11) umfasst, die jeweils an zwei verschiedenen Abschnitten des Entnahmekreises (7) angeordnet sind, die jeweils mit den zwei verschiedenen Leitungen (4, 14) des Kühlkreises verbunden sind, die mit den Tauschern oder den Rohrschlangen (9, 10) ausgestattet sind.

9. Station nach einem der Ansprüche 1 bis 8, **dadurch gekennzeichnet, dass** der erste (2) und zweite (3) Behälter doppelwandige Kryobehälter mit Vakuumzwischenwand sind.

10. Station nach Anspruch 9, **dadurch gekennzeichnet, dass** der erste (2) und zweite (3) Behälter in einem gemeinsamen Außenmantel (12) unter Vakuum untergebracht sind.

11. Verfahren zum Speichern eines entzündlichen Kraftstofffluids in einer Füllstation, die einen ersten Kryobehälter (2), der entzündlichen Kraftstoff in Form einer kryogenen Flüssigkeit speichert, einen zweiten Kryobehälter (3), der ein inertes Gas bei einer Temperatur unterhalb der Temperatur des in dem ersten Behälter (2) enthaltenen Fluids speichert, umfasst, wobei die Station einen Kühlkreis (4,14) im Wärmeaustausch mit dem ersten Behälter (2) umfasst, wobei der Kühlkreis (4, 14) ein stromaufwärtiges Ende umfasst, das mit dem zweiten Kryobehälter (3) verbunden ist, wobei der Kühlkreis (4, 14) mindestens einen Tauscher oder eine Rohrschlange (9, 10) umfasst, der/die innerhalb des ersten Behälters (2) untergebracht ist, das heißt in Kontakt mit dem Kraftstofffluid, wobei das Verfahren einen Entnahmeschritt von kryogenem Fluid aus dem zweiten Kryobehälter (3), einen Wärmeaustauschschritt zwischen diesem entnommenen Fluid und dem in dem zweiten Kryobehälter (3) enthaltenen Fluid umfasst, um die Verdampfung des Fluids in dem ersten Behälter (2) zu reduzieren oder zu unterdrücken, wobei das Verfahren **dadurch gekennzeichnet ist, dass** es einen Detektionsschritt eines möglichen Fluidlecks aus dem ersten Behälter (2) und, im Falle der Detektion eines solchen Lecks, einen Freisetzungsschritt von Fluid aus dem zweiten Behälter (3) in die Atmosphäre innerhalb der Station angrenzend an den ersten Behälter (2) umfasst, um eine Entzündung durch Inertisierung zu verhindern, und dadurch, dass der Fluid-Entnahmekreis (7) des zweiten Behälters (3) mit dem Kühlkreis (4, 14) verbunden und mit Fluid aus diesem versorgt ist.

12. Verfahren nach Anspruch 11, **dadurch gekennzeichnet, dass** das im ersten Behälter (2) enthaltene Fluid mindestens eines umfasst von: Erdgas, Methan, Wasserstoff, und dadurch, dass das im zweiten Behälter (3) enthaltene Fluid mindestens eines umfasst von: Stickstoff, Argon.

13. Verfahren nach Anspruch 11 oder 12, **dadurch gekennzeichnet, dass** das im Falle der Detektion eines Fluids aus dem ersten Behälter abgelassene Fluid von dem Fluid stammt, das mit dem Fluid aus dem zweiten Kryobehälter thermisch ausgetauscht hat.

## Claims

1. Station for supplying a flammable fuel fluid, the station (1) comprising a first cryogenic tank (2) for storing flammable fuel in the form of a cryogenic liquid, a second cryogenic tank (3) for storing a non-flammable gas and in particular an inert gas stored in the form of a cryogenic liquid, a cooling circuit (4, 14) in thermal exchange with the first tank (2), the cooling circuit (4, 14) comprising at least one upstream end connected to the second cryogenic tank (3) for taking cryogenic fluid in the second cryogenic tank (3) for the purpose of transferring frigories of the fluid of the second cryogenic tank (3) to the first tank (2), the cooling circuit (4, 14) comprising at least one exchanger or coil (9, 10) housed inside the first tank (2), i.e. in contact with the fuel fluid, the station comprising a circuit (4, 14, 7) for withdrawing fluid from the second tank (3), **characterised in that** the station comprises at least one fuel leak detector (5) of the first tank (2) and at least one controlled member (6, 11) for the opening of a portion of the withdrawing circuit (4, 14, 7), the at least one opening member (6) being automatically controlled in response to a detection of a leak by the at least one detector (5) in order to release fluid coming from the second cryogenic tank (3) in such a way as to inert a volume within the station and **in that** the circuit (7) for withdrawing fluid from the second tank (3) is connected to the cooling circuit (4, 14) and supplied with fluid coming from the latter.

2. Station according to claim 1, **characterised in that** the leak detector (5) comprises at least one from: a fuel sensor, a catalytic probe, a chemical sensor, a sensor of the optical type.

3. Station according to claim 1 or 2, **characterised in that** the at least one opening member (6, 11) comprises at least one from: a tap, a valve, a spray nozzle.

4. Station according to any one of claims 1 to 3, **characterised in that** the at least one opening member (6, 11) is spaced from the first tank (2) by a distance between zero and five metres and more preferably between zero and two metres.

5. Station according to any one of claims 1 to 4, **characterised in that** it contains a control cabinet (8) grouping together functional members for controlling the station and **in that** the at least one opening member (6, 11) comprises an end that opens at least partially into said cabinet (8).

6. Station according to any one of claims 1 to 5, **characterised in that** it comprises two separate spaced opening members (6, 11).

7. Station according to any one of claims 1 to 6, **characterised in that** the cooling circuit comprises two separate conduits (4, 14) connected by an upstream end to the second tank (3) and each provided with an exchanger or coil (9, 10) or condenser housed in the first tank (2), the two coils (9, 10) being respectively located in the upper and lower portions of the first tank (2).

8. Station according to claim 7, **characterised in that** it comprises two opening members (6, 11) located respectively on two separate portions of the withdrawing circuit (7) connected respectively to the two separate conduits (4, 14) of the cooling circuit provided with exchangers or coils (9, 10).

9. Station according to any one of claims 1 to 8, **characterised in that** the first (2) and second (3) tanks are double-wall cryogenic tanks with inter-wall vacuum.

10. Station according to claim 9, **characterised in that** the first (2) and second (3) tanks are housed in an outer common jacket (12) in a vacuum.

11. Method for storing a flammable fuel fluid in a filling station comprising a first cryogenic tank (2) storing flammable fuel in the form of a cryogenic liquid, a second cryogenic tank (3) storing an inert gas at a temperature less than the temperature of the fluid contained in the first tank (2), the station comprising a cooling circuit (4, 14) in thermal exchange with the first tank (2), the cooling circuit (4, 14) comprising an upstream end connected to the second cryogenic tank (3), the cooling circuit (4, 14) comprising at least one exchanger or coil (9, 10) housed inside the first tank (2), i.e. in contact with the fuel fluid, the method comprising a step of withdrawing cryogenic fluid from the second cryogenic tank (3), a step of thermal exchange between this withdrawn fluid and the fluid contained in the second cryogenic tank (3) in order to reduce or suppress the vaporisation of the fluid in the first tank (2), the method being **characterised in that** it comprises a step of detecting a possible leakage of fluid of the first tank (2) and, in the event such a leak is detected, a step of releasing fluid coming from the second tank (3) into the atmosphere within the station in a manner that is adjacent to the first tank (2) in order to prevent an ignition via inerting and **in that** the circuit (7) for withdrawing fluid from the second tank (3) is connected to the cooling circuit (4, 14) and supplied with fluid coming from the latter.

12. Method according to claim 11, **characterised in that** the fluid contained in the first tank (2) comprises at least one from among: natural gas, methane, hydrogen and **in that** the fluid contained in the second tank (3) comprises at least one from among: nitrogen, argon.

13. Method according to claim 11 or 12, **characterised in that** the fluid released in the event of detection of a fluid of the first tank comes from the fluid that has thermally exchanged with the fluid of the second cryogenic tank.
